# EUROPEAN PATENT APPLICATION

(11) **EP 4 632 241 A1**
(43) Date of publication of application: **15.10.2025**
(21) Application number: 24829714.5
(22) Date of filing: 08.01.2024
(51) Int. Cl.: F16C 11/04, G09F 9/30

(54) **ROTATING SHAFT MECHANISM AND ELECTRONIC DEVICE**

(30) Priority: 30.06.2023 CN 202310800950
(71) Applicant: Huawei Technologies Co., Ltd., Shenzhen, Guangdong 518129 (CN)
(72) Inventor: QIAN, Chenyang, Shenzhen, Guangdong 518129 (CN); ZHAO, Yaoxu, Shenzhen, Guangdong 518129 (CN); LI, Min, Shenzhen, Guangdong 518129 (CN); WANG, Wei, Shenzhen, Guangdong 518129 (CN); XU, Mingjie, Shenzhen, Guangdong 518129 (CN)
(74) Representative: Maiwald GmbH
(86) International application number: PCT/CN2024/071132
(87) International publication number: WO 2025/001051

(57) **Abstract**

A hinge mechanism (200) and an electronic device including the hinge mechanism (200) are provided. The hinge mechanism (200) includes a first door plate (202), a second door plate (203), and a main shaft (204). A display module (11) is disposed on a side of the first door plate (202) and the second door plate (203), the main shaft (204) is disposed on a side that is of the first door plate (202) and the second door plate (203) and that is away from the display module (11), a first mounting hole is provided on the main shaft (204), and a second mounting hole is provided on the first door plate (202); the first door plate (202) has a first surface and a second surface that are opposite to each other, the first surface faces the display module (11), the second surface faces the main shaft (204), an opening of the second mounting hole is located on the second surface, and there is a spacing between a bottom surface of the second mounting hole and the first surface; and the first door plate (202) is connected to the main shaft (204) via connectors disposed in the first mounting hole and the second mounting hole. The second mounting hole provided on the first door plate (202) is designed as a blind hole, to weaken a light and shadow crease.

## Description

This application claims priority to Chinese Patent Application No. 202310800950.1, filed with the China National Intellectual Property Administration on June 30, 2023 and entitled "HINGE MECHANISM AND ELECTRONIC DEVICE", which is incorporated herein by reference in its entirety.

### TECHNICAL FIELD

This application relates to the field of display technologies, and in particular, to a hinge mechanism that can drive a display module to fold, and a foldable electronic device including the hinge mechanism.

### BACKGROUND

With development of human-computer interaction technologies, display becomes an important element of human-computer interaction. Therefore, foldable electronic devices, for example, foldable phones, emerge.

How to improve use performance of the foldable electronic devices is a main problem currently faced, for example, how to weaken light and shadow creases, implement good bendability during bending, implement high flattening stiffness during unfolding, and implement good impact resistance and extrusion resistance performance.

### SUMMARY

This application provides a hinge mechanism and an electronic device including the hinge mechanism. A main objective is to weaken a light and shadow crease of the electronic device.

To achieve the foregoing objectives, the following technical solutions are used in embodiments of this application.

According to a first aspect, this application provides a hinge mechanism. The hinge mechanism may be used in a foldable electronic device, for example, a triple foldable electronic device or a quad foldable electronic device.

The hinge mechanism provided in this application includes a first door plate, a second door plate, and a main shaft. A display module is disposed on a side of the first door plate and the second door plate, and the first door plate and the second door plate are movable toward or away from each other, to drive the display module to switch between an unfolded state and a closed state; the main shaft is disposed on a side that is of the first door plate and the second door plate and that is away from the display module, a first mounting hole is provided on the main shaft, and a second mounting hole is provided on the first door plate; the first door plate has a first surface and a second surface that are opposite to each other, the first surface faces the display module, the second surface faces the main shaft, an opening of the second mounting hole is located on the second surface, and there is a spacing between a bottom surface of the second mounting hole and the first surface; and the first door plate is connected to the main shaft via connectors disposed in the first mounting hole and the second mounting hole.

In the hinge mechanism in this application, there is the spacing between the bottom surface of the second mounting hole that is provided on the first door plate and used to fasten a connector and the first surface (a surface facing the display module) of the first door plate, and the second mounting hole is a blind hole. After the connector is fastened, the connector does not protrude from the first surface of the first door plate as in the conventional technology. When the hinge mechanism in the example of this application is used to support the display module, a light and shadow crease can be reduced.

In a possible implementation, the hinge mechanism further includes a circuit board. There is a first gap between the first door plate and the main shaft, there is a second gap between the second door plate and the main shaft, and the circuit board passes through the first gap and the second gap.

In some assembly processes, the circuit board may be first mounted, and then the first door plate and the second door plate are mounted.

In a possible implementation, the first door plate has a first end and a second end along a bending line of the display module, and the circuit board is disposed between the first end and the second end; and the second mounting hole is provided on each of the first end and the second end.

The second mounting hole is provided close to an end of the door plate, so that the light and shadow crease can be further reduced.

In a possible implementation, the second mounting hole is a threaded hole, and the connector is a threaded connector.

The main shaft is fastened to the door plate via the threaded connector.

In a possible implementation, a side that is of the main shaft and that faces the first door plate has a bump, the first door plate has a hole, the bump is disposed in the hole, and a surface that is of the bump and that is away from the main shaft is flush with the first surface.

The door plate is fastened to the main shaft via the bump disposed in the hole and the connector. In addition, because the surface of the bump is flush with the first surface of the first door plate, the light and shadow crease can be reduced.

According to a second aspect, this application further provides an electronic device, including a display module and at least one hinge mechanism. The at least one hinge mechanism is the hinge mechanism in any one of the foregoing implementations, and the at least one hinge mechanism is disposed on a side that is of the display module and that is away from a display surface.

The electronic device provided in embodiments of this application includes the hinge mechanism. In the hinge mechanism, a second mounting hole that is provided on a first door plate and used to dispose a connector is a blind hole. After the connector is fastened, the connector does not protrude from a first surface of the first door plate as in the conventional technology. When the hinge mechanism in the example of this application is used to support the display module, a light and shadow crease can be reduced.

In a possible implementation, the at least one hinge mechanism of the electronic device includes a first hinge mechanism and a second hinge mechanism. The display module includes a display and a cover plate. The cover plate is disposed on a side of the display surface of the display. The cover plate includes a first non-bending area, a second non-bending area, a third non-bending area, a first bending area, and a second bending area, the first bending area is connected to the first non-bending area and the second non-bending area, the second bending area is connected to the second non-bending area and the third non-bending area, and both the first bending area and the second bending area are bendable along a bending line, to switch between an unfolded state and a closed state. The first bending area corresponds to the first hinge mechanism, and the second bending area corresponds to the second hinge mechanism. A thickness of the first non-bending area is not equal to a thickness of the second non-bending area.

Embodiments provide an electronic device having at least three folds. The first hinge mechanism and the second hinge mechanism can weaken a light and shadow crease of a bending area. In addition, the thickness of the first non-bending area is not equal to the thickness of the second non-bending area, in other words, the cover plate is designed to be of an unequal-thickness structure. For example, in some scenarios, when the thickness of the first non-bending area is increased to improve stiffness of the first non-bending area exposed (which may present a picture to a user) in a closed state, an unequal thickness design of the cover plate is used, so that bendability of the first bending area is basically not affected by an increase in the thickness of the first non-bending area. The electronic device provided in embodiments can not only weaken a light and shadow crease, but also improve stiffness of a non-bending area and bendability of a bending area.

In a possible implementation, the thickness of the first non-bending area is greater than the thickness of the second non-bending area.

In a possible implementation, the cover plate includes a substrate and a first cushion layer. The first cushion layer is closer to the display than the substrate. A thickness of the substrate located in the first non-bending area is greater than a thickness of the substrate located in the second non-bending area; and/or a thickness of the first cushion layer located in the first non-bending area is greater than a thickness of the first cushion layer located in the second non-bending area.

In some implementation structures, at least one of the substrate or the cushion layer in the cover plate may be designed to be of an unequal-thickness structure.

In a possible implementation, a thickness of the first cushion layer located in the first bending area gradually decreases in a direction from the first non-bending area to the second non-bending area.

In a possible implementation, the cover plate includes a second cushion layer. The second cushion layer includes a first part and a second part.

The first part of the second cushion layer is located in the first non-bending area, the second part of the second cushion layer is located in the first bending area, and an elastic modulus of the first part of the second cushion layer is greater than an elastic modulus of the second part of the second cushion layer.

To further improve bendability of the bending area, the second cushion layer may be designed to be of a structure with unequal elastic moduli.

### BRIEF DESCRIPTION OF DRAWINGS

FIG. 1 is a diagram of a structure of a foldable electronic device;
FIG. 2 is a diagram of a structure of another foldable electronic device;
FIG. 3 is a diagram of structures of a hinge mechanism and a display module;
FIG. 4 is a diagram of a structure of a hinge mechanism;
FIG. 5 is a diagram of a structure of a hinge mechanism according to an embodiment of this application;
FIG. 6 is a top view of a first door plate or a second door plate according to an embodiment of this application;
FIG. 7 is a three-dimensional diagram of a first door plate or a second door plate according to an embodiment of this application;
FIG. 8 is a bottom view of a first door plate or a second door plate according to an embodiment of this application;
FIG. 9 is a diagram of a structure of a main shaft according to an embodiment of this application;
FIG. 10 is a diagram of a structure of a part of a main shaft according to an embodiment of this application;
FIG. 11 is a diagram of a structure of a multi foldable display module in an unfolded state according to an embodiment of this application;
FIG. 12 is a diagram of a structure of a multi foldable display module in an unfolded state according to an embodiment of this application;
FIG. 13 is a diagram of a structure of a multi foldable display module in an unfolded state according to an embodiment of this application;
FIG. 14 is a diagram of a structure of a multi foldable display module in a closed state according to an embodiment of this application;
FIG. 15 is a diagram of a structure of a multi foldable display module in an unfolded state according to an embodiment of this application;
FIG. 16 is a diagram of a structure of a multi foldable display module in an unfolded state according to an embodiment of this application;
FIG. 17 is a diagram of a structure of a multi foldable display module in an unfolded state according to an embodiment of this application;
FIG. 18 is a diagram of a structure of a multi foldable display module in an unfolded state according to an embodiment of this application;
FIG. 19 is a diagram of a structure of a cover plate in a multi foldable display module in an unfolded state according to an embodiment of this application;
FIG. 20 is a diagram of a structure of a cover plate in a multi foldable display module in an unfolded state according to an embodiment of this application;
FIG. 21 is a diagram of a structure of a cover plate in a multi foldable display module in an unfolded state according to an embodiment of this application;
FIG. 22 is a diagram of a structure of a cover plate in a multi foldable display module in an unfolded state according to an embodiment of this application;
FIG. 23 is a diagram of a structure of a cover plate in a multi foldable display module in an unfolded state according to an embodiment of this application;
FIG. 24 is a diagram of a structure of a cover plate in a multi foldable display module in an unfolded state according to an embodiment of this application;
FIG. 25 is a diagram of a structure of a multi foldable display module in an unfolded state according to an embodiment of this application;
FIG. 26 is a diagram of a structure of a cover plate in a multi foldable display module in an unfolded state according to an embodiment of this application;
FIG. 27 is a diagram of a structure of a cover plate in a multi foldable display module in an unfolded state according to an embodiment of this application;
FIG. 28 is a diagram of a structure of a cover plate in a multi foldable display module in an unfolded state according to an embodiment of this application;
FIG. 29 is a diagram of a structure of a multi foldable display module in an unfolded state according to an embodiment of this application;
FIG. 30 is a diagram of a structure of a multi foldable display module in an unfolded state according to an embodiment of this application;
FIG. 31 is a diagram of a structure of a multi foldable display module in an unfolded state according to an embodiment of this application;
FIG. 32 is a diagram of a structure of a multi foldable display module in an unfolded state according to an embodiment of this application; and
FIG. 33 is a diagram of a structure of a multi foldable display module in an unfolded state according to an embodiment of this application.

### DESCRIPTION OF EMBODIMENTS

The following describes in detail specific embodiments in this application with reference to the accompanying drawings.

Embodiments of this application provide an electronic device. The electronic device may be a foldable electronic device.

The electronic device may include an electronic product having a display function, for example, a mobile phone (mobile phone), a tablet computer (pad), a smart wearable product (for example, a smart watch or a smart band), a virtual reality (virtual reality, VR) terminal device, or an augmented reality (augmented reality, AR) terminal device. A specific form of the electronic device having the display function is not specifically limited in embodiments of this application.

For ease of description, the following describes a structure of the electronic device by using an example in which the electronic device is a mobile phone.

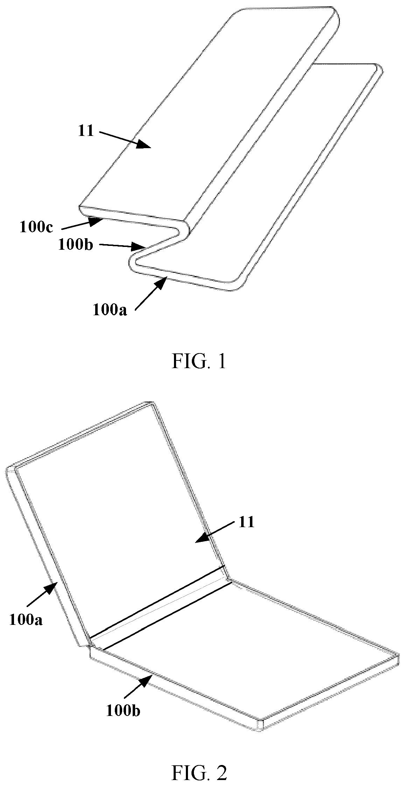

FIG. 1 is a diagram of a structure of a foldable phone. In addition, for example, the foldable phone is a triple-screen foldable phone. The triple-screen foldable phone may include a first housing 100a, a second housing 100b, a third housing 100c, and a display module 11. The display module 11 may continuously cover the first housing 100a, the second housing 100b, and the third housing 100c. The foldable phone may further include a first hinge mechanism and a second hinge mechanism.

The first housing 100a and the second housing 100b are disposed on two sides of the first hinge mechanism, and are separately connected to the first hinge mechanism. The first hinge mechanism is movable, so that the first housing 100a and the second housing 100b are folded or unfolded relative to each other, to unfold or close the display module 11 disposed on the first housing 100a and the second housing 100b.

The second housing 100b and the third housing 100c are disposed on two sides of the second hinge mechanism, and are separately connected to the second hinge mechanism. The second hinge mechanism is movable, so that the second housing 100b and the third housing 100c are folded or unfolded relative to each other, to unfold or close the display module 11 disposed on the second housing 100b and the third housing 100c.

FIG. 2 is a diagram of a structure of a dual-screen foldable phone. The foldable phone includes a first housing 100a, a second housing 100b, a display module 11, and a hinge mechanism. The display module 11 may be disposed on the first housing 100a and the second housing 100b. The first housing 100a and the second housing 100b are disposed on two sides of the hinge mechanism, and are separately connected to the hinge mechanism. The display module 11 may also be unfolded or closed under an action of the hinge mechanism.

The foldable electronic device may be unfolded to be in an unfolded state, or may be folded to be in a closed state, or may be in an intermediate state between the unfolded state and the closed state. The foldable electronic device has at least two states: the unfolded state and the closed state. In some cases, the foldable electronic device may further include a third state, namely, the intermediate state between the unfolded state and the closed state. The intermediate state is not a unique state, and may be any one or more states between the unfolded state and the closed state of the electronic device.

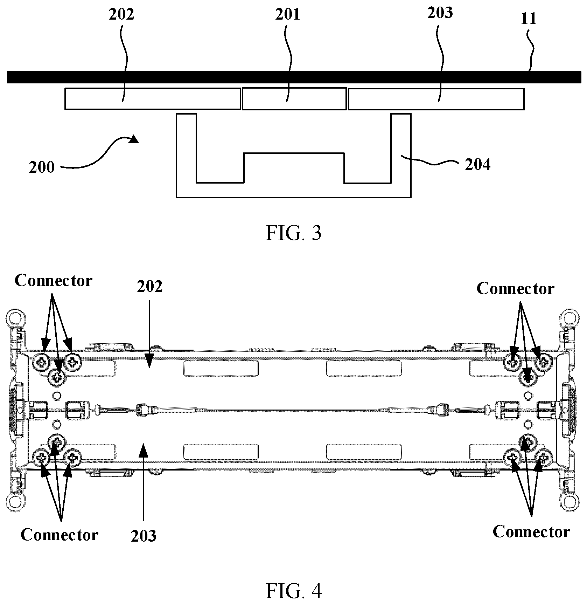

As shown in FIG. 3, a hinge mechanism 200 includes a first door plate 202, an intermediate door plate 201, and a second door plate 203 that are configured to support the display module 11. The hinge mechanism 200 further includes a main shaft 204. The first door plate 202 and the second door plate 203 are rotatable relative to the main shaft 204. For example, the first door plate 202 and the second door plate 203 are movable toward or away from each other, so that the display module 11 switches between the unfolded state and the closed state.

To connect each door plate to the main shaft, FIG. 4 shows a structure of a connection between the main shaft and each of the first door plate 202 and the second door plate 203. Threaded holes are provided on the first door plate 202 and the second door plate 203. The first door plate 202 and the second door plate 203 are fastened to the main shaft 204 via connectors inserted into the threaded holes. The assembled connector protrudes from a surface (the surface faces the display module) of the door plate, so that the surface of the entire door plate is not flat.

As a result, a light and shadow crease of the display module in a threaded hole area is clear, and a display effect is reduced. In addition, impact resistance and extrusion resistance performance of the display module in the threaded hole area is poor, and user experience is reduced.

To weaken the light and shadow crease, improve the display effect, and improve the impact resistance and extrusion resistance performance, embodiments of this application provide some other hinge mechanisms. For details, refer to the following descriptions about structures.

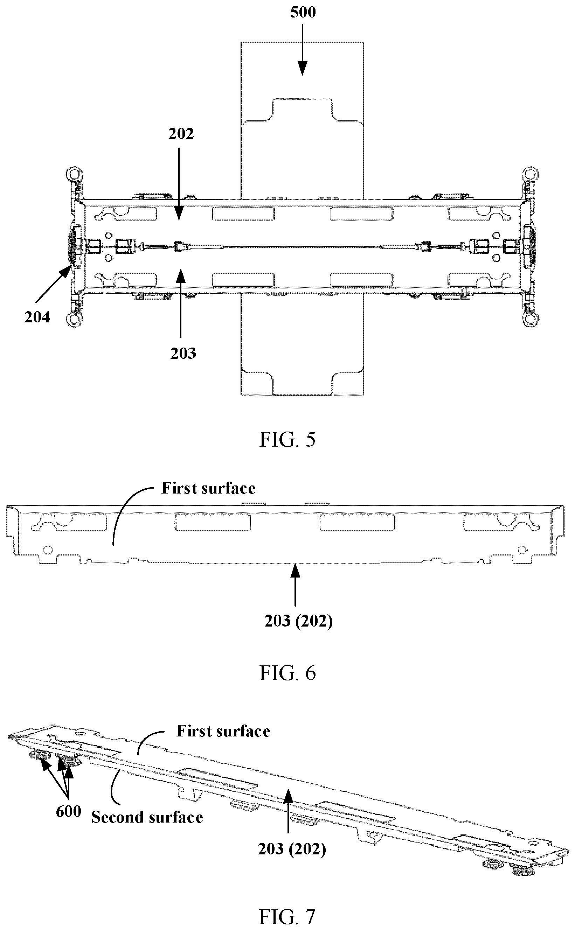

FIG. 5 is a diagram of an assembly structure of a hinge mechanism and a circuit board according to an embodiment of this application. The hinge mechanism includes a first door plate 202, a second door plate 203, and a main shaft 204.

FIG. 6 is a top view of the first door plate 202 fastened to the main shaft 204 or the second door plate 203 fastened to the main shaft 204 according to an embodiment of this application. As shown in FIG. 6, no mounting hole for disposing a connector is provided on a first surface that is of the first door plate 202 or the second door plate 203 and that is away from the main shaft 204 in embodiments of this application. The first surface has higher flatness than the surface of the door plate shown in FIG. 4. In this way, a light and shadow crease can be weakened.

In some examples, FIG. 7 shows a manner of connecting the first door plate 202 or the second door plate 203 to the main shaft 204. The following uses the first door plate 202 as an example. For a manner of connecting the second door plate 203 to the main shaft 204, refer to a manner of connecting the first door plate 202 to the main shaft 204.

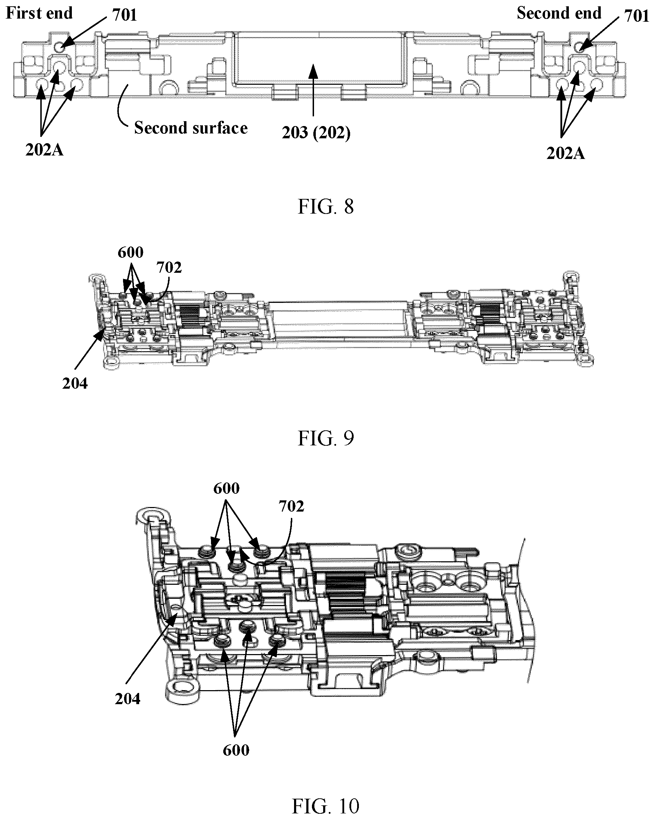

As shown in FIG. 7, the first door plate 202 has a first surface and a second surface that are opposite to each other. The second surface is closer to the main shaft 204 than the first surface. The first surface faces a display module, and the second surface faces the main shaft 204. FIG. 8 is a diagram of a structure viewed from the second surface. A mounting hole 202A is provided on the first door plate 202 in a direction from the second surface to the first surface, the mounting hole 202A does not penetrate through the first surface, there is a spacing between a bottom surface of the mounting hole 202A and the first surface, and the mounting hole 202A provided on the first door plate 202 is a blind hole.

FIG. 9 shows an assembly relationship between the main shaft 204 and a connector 600, and FIG. 10 shows a partial structure of the main shaft. As shown in FIG. 9 and FIG. 10, a mounting hole for inserting the connector 600 is provided on the main shaft 204, and the connector 600 penetrates into the first door plate 202 from the mounting hole on the main shaft 204, to fasten the first door plate 202 to the main shaft 204.

In the example of this application, the mounting hole 202A provided on the first door plate 202 is a blind hole. As shown in FIG. 5, a connector cannot be viewed on a first surface of the first door plate 202, so that a light and shadow crease caused by the connector can be weakened. The mounting hole 202A of a blind hole structure can improve strength of the first door plate 202 or the second door plate 203, and improve impact resistance and extrusion resistance performance of the first door plate 202 or the second door plate 203.

In a foldable electronic device, either of a first housing or a second housing located on two sides of the hinge mechanism may form mounting space for mounting electronic components such as a circuit board, a battery, a receiver, a speaker, and a camera of the device. The circuit board may integrate electronic components such as a main controller, a storage unit, an antenna module, and a power management module of the electronic device. The battery may supply power to the electronic components such as the display module, the circuit board, the receiver, the speaker, and the camera.

For example, the circuit board, for example, a printed circuit board (printed circuit board, PCB), may be disposed in mounting space of the first housing, and the battery may be disposed in mounting space of the second housing.

To enable the battery to supply power to the circuit board, an electrical connection structure spanning between the first housing and the second housing is disposed. In addition, during use of the electronic device, the first housing and the second housing need to repeatedly move toward or away from each other for a plurality of times. Therefore, a flexible electrical connection structure that includes a bending portion to be bendable needs to be used. For example, a flexible printed circuit (flexible printed circuit, FPC) may be used.

With reference to FIG. 5, in the example of this application, there is a first gap between the main shaft 204 and the first door plate 202, and there is a second gap between the main shaft 204 and the second door plate 203. A circuit board 500 may pass through the first gap and the second gap, then the first door plate 202 and the second door plate 203 are mounted, and a connector penetrating from the main shaft 204 to the door plate is tightened, to fasten the door plate to the main shaft 204.

As shown in FIG. 8, a plurality of mounting holes 202A may be provided on the first door plate 202 or the second door plate 203.

The first door plate 202 or the second door plate 203 has a first end and a second end, and a plurality of mounting holes 202A may be provided on each of the first end and the second end. These mounting holes 202A are provided close to an end of the door plate, and the light and shadow crease can be further reduced compared with that caused when these mounting holes are provided close to the center of the door panel.

In embodiments of this application, the first door plate may be fastened to the main shaft via a connector. Embodiments of this application further provide a connection manner. As shown in FIG. 9 and FIG. 10, a bump 702 is disposed on a side that is of the main shaft 204 and that faces the first door plate 202. As shown in FIG. 8, a hole 701 may be provided on the first door plate 202, and the bump 702 is disposed in the hole 701.

In some examples, the hole 701 may not penetrate through the first surface of the first door plate 202, and is similar to the mounting hole 202A in structure as a blind hole.

In some other examples, the hole 701 may penetrate through the first surface of the first door plate 202, and a surface that is of the bump 702 and that is away from the main shaft 204 is flush with the first surface of the first door plate 202. This weakens a light and shadow crease caused by the bump.

In some hinge mechanisms, as shown in FIG. 5, an intermediate door plate is disposed between the first door plate 202 and the second door plate 203, and the intermediate door plate may also use the structure of the connection between the first door plate 202 and the main shaft 204, to weaken a light and shadow crease at the intermediate door plate.

In embodiments of this application, a structure of the hinge mechanism may be changed to weaken a light and shadow crease in a bending area of the display module. In some multi foldable electronic devices, for example, a triple foldable electronic device, when the multi foldable electronic device is in a folded (or closed) state, a non-bending area of a display module may be exposed and needs to have sufficient stiffness and strength, and a bending area needs to have good bendability.

This application provides some display module embodiments, so that stiffness of a non-bending area can be improved, and bendability of a bending area is not weakened.

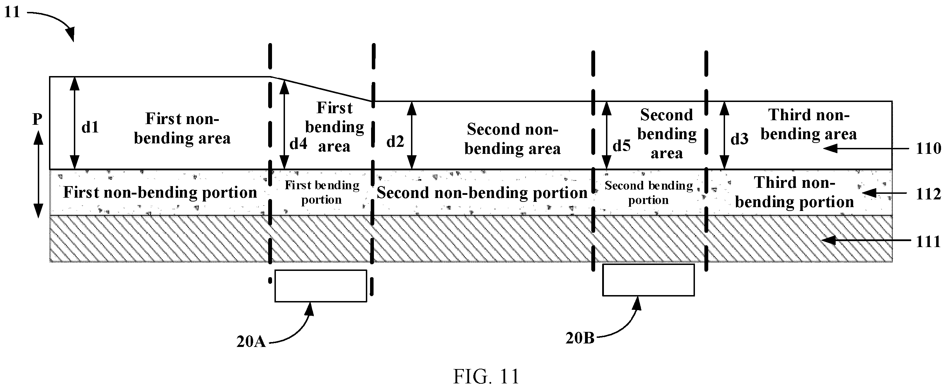

FIG. 11 is a diagram of a structure of a display module according to an embodiment of this application. The display module 11 may include a bracket (bracket) 111, a display (panel) 112, and a cover plate 110.

The bracket 111 and the cover plate 110 are disposed on two opposite sides of the display 112. The bracket 111 is located on a back side of the display 112, and is used as a support structure to support the display 112. The cover plate 110 is located on a side of a display surface of the display 112, and is configured to protect the display 112, to reduce a probability that the display 112 is damaged.

The display surface of the display 112 in embodiments of this application is a surface that is of the display 112 and that is used to display a picture to a user, and a back surface of the display 112 is a surface opposite to the display surface of the display 112.

As shown in FIG. 11, the display 112 includes a first non-bending portion, a second non-bending portion, a third non-bending portion, a first bending portion, and a second bending portion. The first bending portion is connected to the first non-bending portion and the second non-bending portion, and the second bending portion is connected to the second non-bending portion and the third non-bending portion.

As shown in FIG. 11, the cover plate 110 in the display module 11 includes a first non-bending area, a second non-bending area, a third non-bending area, a first bending area connected to the first non-bending area and the second non-bending area, and a second bending area connected to the second non-bending area and the third non-bending area.

As shown in FIG. 11, the first non-bending portion of the display 112 corresponds to the first non-bending area of the cover plate 110, the first bending portion of the display 112 corresponds to the first bending area of the cover plate 110, the second non-bending portion of the display 112 corresponds to the second non-bending area of the cover plate 110, the second bending portion of the display 112 corresponds to the second bending area of the cover plate 110, and the third non-bending portion of the display 112 corresponds to the third non-bending area of the cover plate 110.

The first bending area, the first bending portion, the second bending area, and the second bending portion are all bendable along a bending line, to switch between the unfolded state and the closed state.

In FIG. 11, triple-screen folding is used as an example. In some other examples, more bending areas and non-bending areas may be added based on the structure shown in FIG. 11, to form a quad-screen foldable electronic device, a penta-screen foldable electronic device, or a more-screen foldable electronic device.

As shown in FIG. 11, a first hinge mechanism 20A and a second hinge mechanism 20B may be disposed on a back side of the display module 11, a position of the first hinge mechanism 20A corresponds to the first bending portion and the first bending area, a position of the second hinge mechanism 20B corresponds to the second bending portion and the second bending area.

A portion including the first bending portion and the first bending area is flattenable or bendable under driving of the first hinge mechanism 20A, and a portion including the second bending portion and the second bending area is flattenable or bendable under driving of the second hinge mechanism 20B.

The first hinge mechanism 20A and the second hinge mechanism 20B in FIG. 11 may use the hinge mechanism shown in FIG. 5. This can weaken light and shadow creases of the first bending area and the second bending area.

As shown in FIG. 11, a thickness of the first non-bending area of the cover plate 110 is d1, a thickness of the second non-bending area is d2, and the thickness d1 is not equal to the thickness d2, for example, the thickness d1 may be greater than the thickness d2.

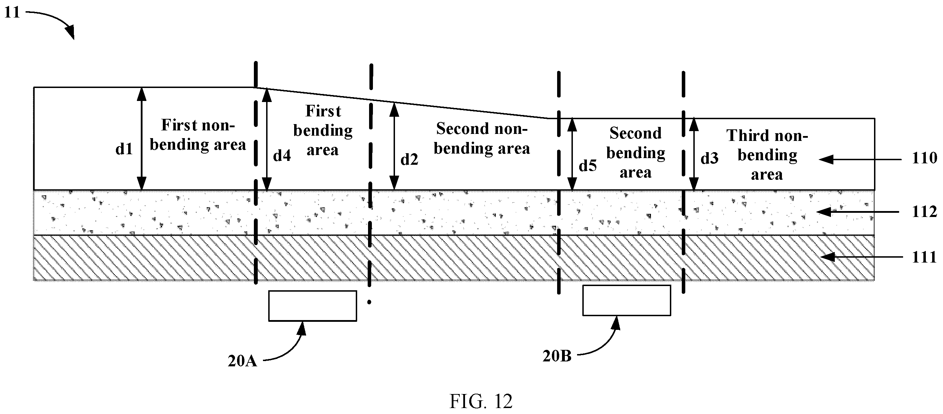

FIG. 12 is a diagram of a structure of another display module according to an embodiment of this application. Similar to FIG. 11, a thickness of a first non-bending area of a cover plate 110 is d1, a thickness of a second non-bending area is d2, and the thickness d1 is not equal to the thickness d2, that is, the thickness d1 is greater than the thickness d2.

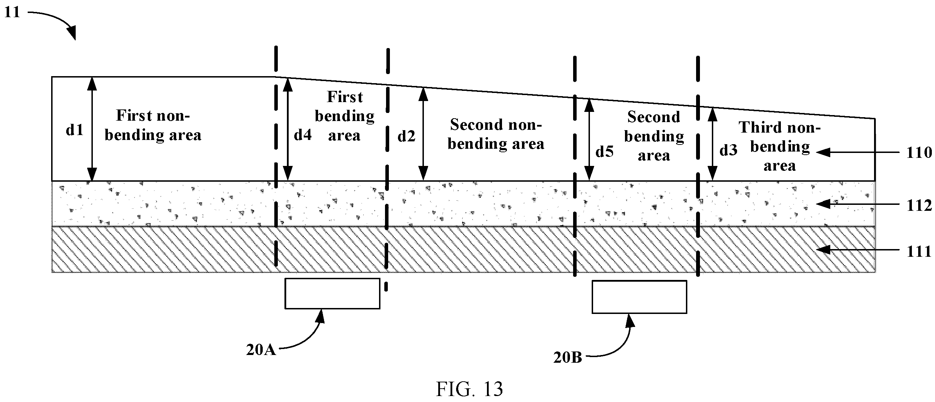

FIG. 13 is a diagram of a structure of another display module according to an embodiment of this application. Similar to FIG. 11 and FIG. 12, in a cover plate 110, a thickness d1 of a first non-bending area is not equal to a thickness d2 of a second non-bending area, that is, the thickness d1 is greater than the thickness d2.

A thickness dimension in embodiments of this application is a dimension in a direction (a P direction) of stacking a plurality of film layers in FIG. 11.

In the three different examples of the display module 11 shown in FIG. 11, FIG. 12, and FIG. 13, a thickness d4 of the first bending area of the cover plate 110 is not constant. Instead, the thickness d4 gradually decreases in a direction away from the first non-bending area, or in a direction from the first non-bending area to the second non-bending area, so that the thickness d2 is less than the thickness d1.

As shown in FIG. 11 to FIG. 13, in the cover plate 110, the first non-bending area is a thick area, the second non-bending area is a thin area, and the first bending area connected to the first non-bending area and the second non-bending area is a thin-thick transition area.

In the three different examples of the display module 11 shown in FIG. 11, FIG. 12, and FIG. 13, differences include the following:

In the cover plate 110 in FIG. 11, a thickness of the second bending area is d5, a thickness of the third non-bending area is d3, and the thickness d2, the thickness d5, and the thickness d3 are equal. The first non-bending area is a thick area, the first bending area is a thick-thin transition area, and the second non-bending area, the second bending area, and the third non-bending area are thin areas with equal thicknesses.

In comparison with FIG. 11, in the example shown in FIG. 12, the thickness d4 of the first bending area is not a constant value, and the thickness d2 of the second non-bending area is not a constant value either. In some examples, thicknesses of the first bending area and the second non-bending area of the cover plate 110 gradually decrease in the direction away from the first non-bending area, so that a visual effect of uneven thickness of the entire display module can be masked.

In FIG. 12, in the cover plate 110, the thickness of the second bending area is equal to the thickness of the third non-bending area. In other words, the thickness d5 is equal to the thickness d3.

In FIG. 12, the first non-bending area is a thick area, the first bending area and the second non-bending area are thick-thin transition areas, and the second bending area and the third non-bending area are thin areas with equal thicknesses.

In comparison with FIG. 11 and FIG. 12, in FIG. 13, thicknesses of the first bending area and the second non-bending area of the cover plate 110 are not constant values, and thicknesses of the second bending area and the third non-bending area of the cover plate 110 are not constant values either. Thicknesses of the first bending area, the second non-bending area, the second bending area, and the third non-bending area of the cover plate 110 gradually decrease in the direction away from the first non-bending area, so that the visual effect of uneven thickness of the entire display module can be further masked.

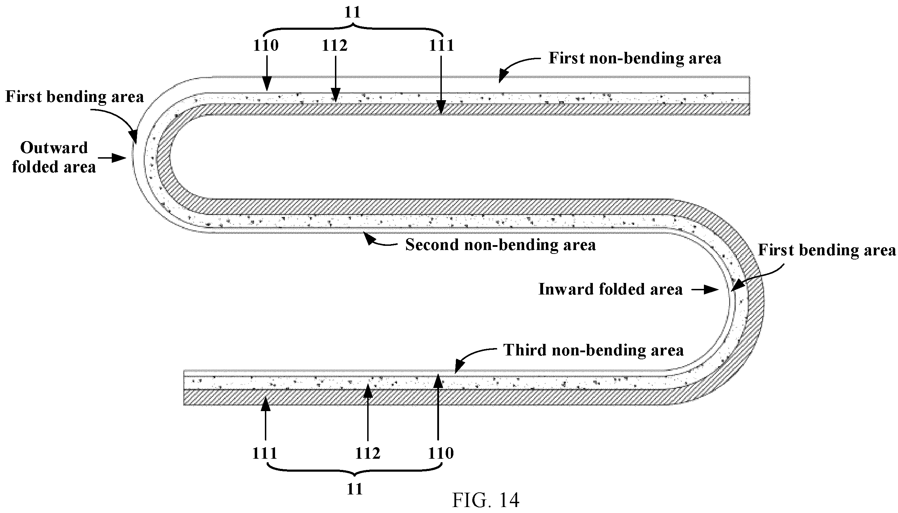

FIG. 14 is a diagram of a structure of the bent display module 11 shown in the embodiment of this application in FIG. 11. A thickness of an exposed first non-bending area (visible to a user during folding) is greater than a thickness of a non-exposed second non-bending area (invisible to the user during folding). A first bending area connected to the exposed first non-bending area is designed to be of an unequal-thickness structure. To improve stiffness and strength of the first non-bending area, the thickness of the first non-bending area is increased, which does not affect bendability of a bending area. A thickness of another area is not increased, and when the entire device is in a folded state, a thickness in a closed state is not significantly increased.

In some examples, the bending area shown in FIG. 11 to FIG. 13 may form an inward folded area, or may form an outward folded area. For example, in the closed state shown in FIG. 14, the first bending area forms an outward folded area, and the second bending area forms an inward folded area. The first non-bending area is exposed, and is visible to the user. The second non-bending area and the third non-bending area are opposite to each other, and are invisible to the user.

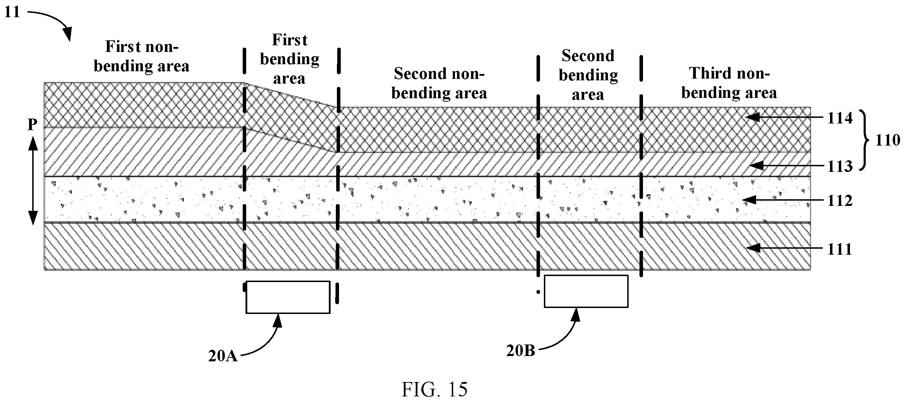

FIG. 15 is a diagram of a structure of a display module according to an embodiment of this application. A thickness of a display cover 113 located in a first non-bending area is greater than a thickness of the display cover 113 located in a second non-bending area, and a thickness of the display cover 113 located in a first bending area gradually decreases in a direction away from the first non-bending area.

In FIG. 15, a protective layer 114 has an equal thickness in bending areas and non-bending areas.

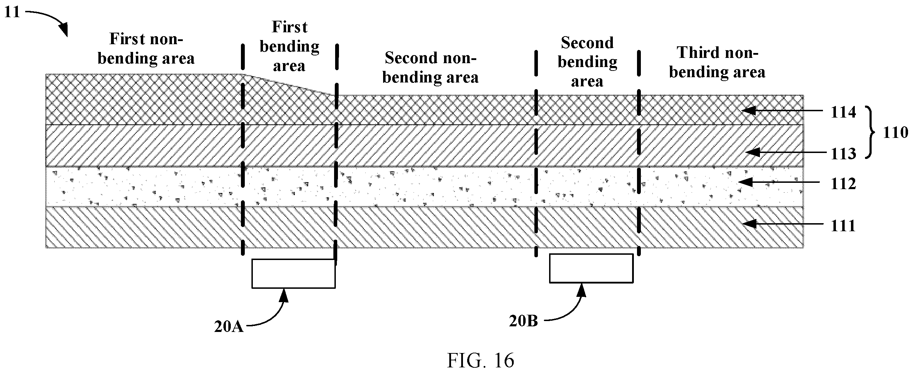

FIG. 16 is a diagram of a structure of another display module according to an embodiment of this application. In this structure, a thickness of a protective layer 114 located in a first non-bending area is greater than a thickness of the protective layer 114 located in a second non-bending area, and a thickness of the protective layer 114 located in a first bending area gradually decreases in a direction away from the first non-bending area.

In FIG. 16, a display cover 113 has an equal thickness in bending areas and non-bending areas.

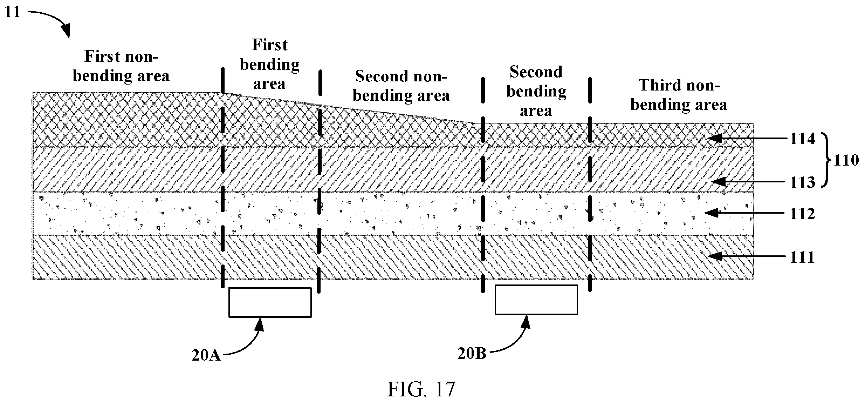

FIG. 17 is a diagram of a structure of another display module according to an embodiment of this application. In comparison with FIG. 16, in this structure, at a protective layer 114, a thickness of a first bending area and a thickness of a second non-bending area gradually decrease in a direction away from a first non-bending area, and a width of a thin-thick transition area of the protective layer 114 is widened.

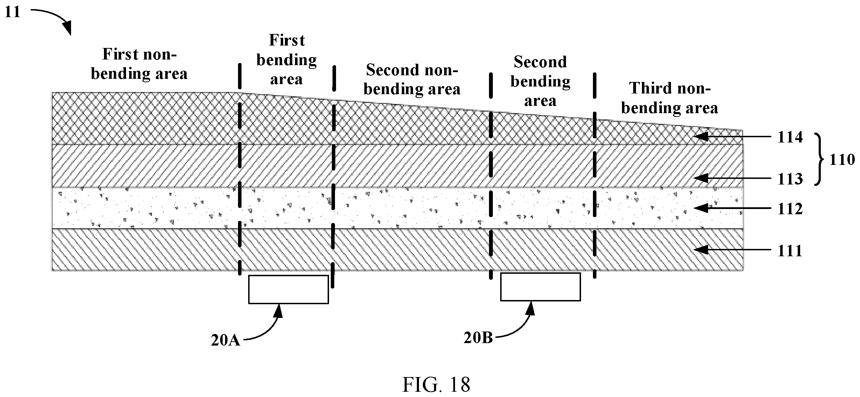

FIG. 18 is a diagram of a structure of another display module according to an embodiment of this application. In comparison with FIG. 16 and FIG. 17, in this example, at a protective layer 114, a thickness of a first bending area, a thickness of a second non-bending area, a thickness of a second bending area, and a thickness of a third non-bending area gradually decrease in a direction away from a first non-bending area, and a width of a thin-thick transition area of the protective layer 114 is further widened.

In FIG. 16 to FIG. 18, an example in which the protective layer 114 is designed to be of an unequal-thickness structure is used. In some other examples, the thick-thin transition area with an uneven thickness may be disposed in another film layer structure. For example, in the display cover 113, the structures shown in FIG. 16 to FIG. 18 may also be used.

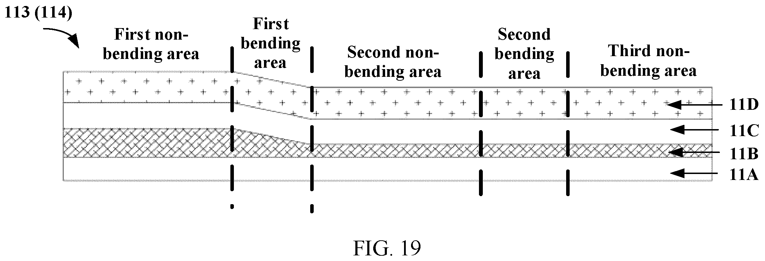

In some examples provided in this application, as shown in FIG. 19, the display cover 113 or the protective layer 114 may include a substrate 11D and a cushion layer 11B.

The substrate 11D and the cushion layer 11B may be connected via a bonding layer 11C, and a bonding layer 11A connects these stacked film layer structures to another layer structure. In some examples, when the protective layer 114 is shown in FIG. 19, a structure including the substrate 11D, the bonding layer 11C, and the cushion layer 11B may be connected to the display cover 113 via the bonding layer 11A.

In some optional materials, the substrate 11D may be made of at least one of polyethylene terephthalate (polyethylene terephthalate, PET), polyimide (polyimide, PI), and transparent polyimide (CPI).

In some examples, the cushion layer 11B is made of an elastomer film material, and an elastic modulus of the cushion layer 11B is less than an elastic modulus of the substrate 11D. The cushion layer 11B may be made of at least one of elastomer film materials such as a thermoplastic polyurethane elastomer TPU and a thermoplastic polyamide elastomer TPAE.

The bonding layer 11A and the bonding layer 11C may be made of at least one of optically clear adhesive (optically clear adhesive, OCA), optically clear resin (optically clear resin, OCR), acrylic resin, epoxy resin, and the like.

Refer to FIG. 19. In embodiments, the cushion layer 11B located in a first bending area is designed to be of an unequal-thickness structure. A thickness of the cushion layer 11B located in the first bending area gradually decreases in a direction away from a first non-bending area, so that the protective layer 114 or the display cover 113 located in the first bending area is in a thick-thin transition area.

In FIG. 19, a thickness of the substrate 11D may be 25 µm to 75 µm. Thicknesses of the bonding layer 11A and the bonding layer 11C may be 25 µm to 50 µm.

A thickness of the cushion layer 11B located in the first non-bending area is 75 µm to 150 µm, and thicknesses of the cushion layer 11B located in a second non-bending area, a second bending area, and a third non-bending area is 25 µm to 75 µm.

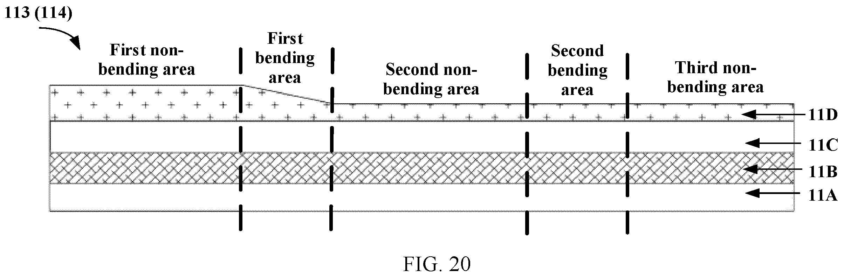

FIG. 20 is a diagram of a structure of another display cover 113 or protective layer 114 according to an embodiment of this application. In this example, a substrate 11D located in a first bending area is designed to be of an unequal-thickness structure. A thickness of the substrate 11D located in the first bending area gradually decreases in a direction away from a first non-bending area, so that the protective layer 114 or the display cover 113 located in the first bending area is in a thick-thin transition area.

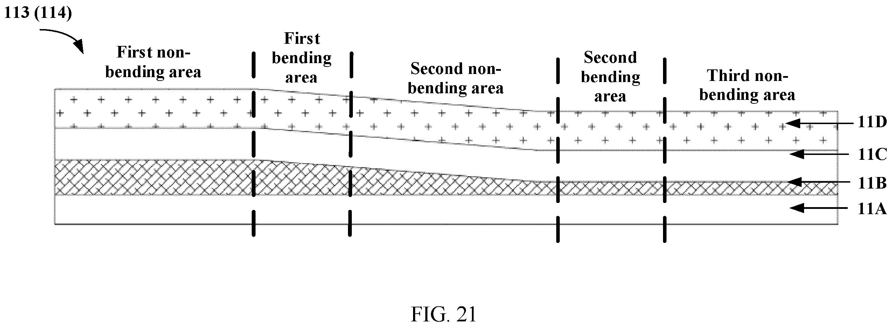

FIG. 21 is a diagram of a structure of another display cover 113 or protective layer 114 according to an embodiment of this application. In comparison with FIG. 20, in this structure, a cushion layer 11B located in a first bending area is designed to be of an unequal-thickness structure, and the cushion layer 11B located in a second non-bending area is also designed to be of an unequal-thickness structure, so that a visual effect of uneven thickness of an entire display module can be weakened.

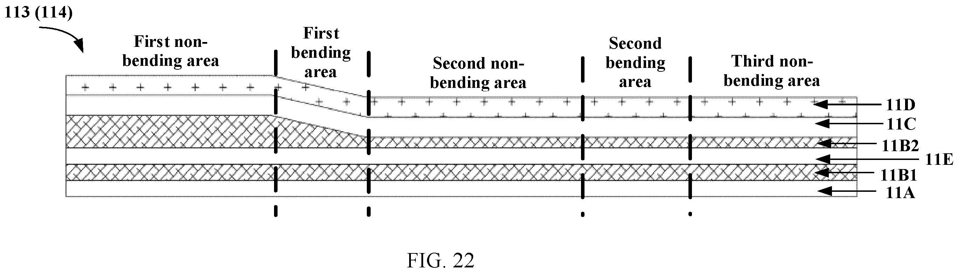

FIG. 22 is a diagram of a structure of another display cover 113 or protective layer 114 according to an embodiment of this application. In some examples, a thickness of a cushion layer 11B is thick. For example, the thickness reaches 100 µm. Because the cushion layer is thick, strain generated on an upper surface and a lower surface of a film when a display module is bent helps easily enter a plastic deformation phase.

When the display module is bent, to weaken the strain generated on the upper surface and the lower surface of the display module and enter the plastic deformation phase, bendability is improved. In some examples, as shown in FIG. 22, the cushion layer 11B includes a first cushion layer 11B1 and a second cushion layer 11B2. The first cushion layer 11B1 is of an equal-thickness structure, and the second cushion layer 11B2 located in a first bending area is designed to be of an unequal-thickness structure. Compared with the first cushion layer 11B1 with an even thickness, the second cushion layer 11B2 with an uneven thickness is farther away from the display, that is, closer to an interface visible to the user. In some other examples, the first cushion layer 11B1 with an even thickness may alternatively be closer to an interface visible to a user than the second cushion layer 11B2 with an uneven thickness.

Refer to FIG. 22. The first cushion layer 11B1 is connected to the second cushion layer 11B2 via a bonding layer 11E, and the second cushion layer 11B2 is connected to the substrate 11D via a bonding layer 11C.

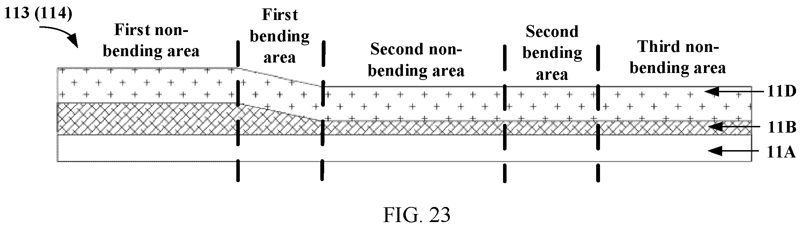

FIG. 23 is a diagram of a structure of another display cover 113 or protective layer 114 according to an embodiment of this application. In some optional processes, a cushion layer 11B and a substrate 11D may be bonded together by using a coating process. A bonding layer configured to connect the cushion layer 11B and the substrate 11D may be removed, to reduce a thickness of an entire display module, without weakening stiffness of non-bending areas and bendability of bending areas.

A material of the cushion layer 11B in the example in FIG. 23 may be at least one of a thermoplastic polyurethane elastomer, a silicone gel, and a shear thickening material.

Refer to FIG. 23. In the example, the cushion layer 11B located in a first bending area is designed to be of an unequal-thickness structure, and the substrate 11D has an equal thickness in all areas.

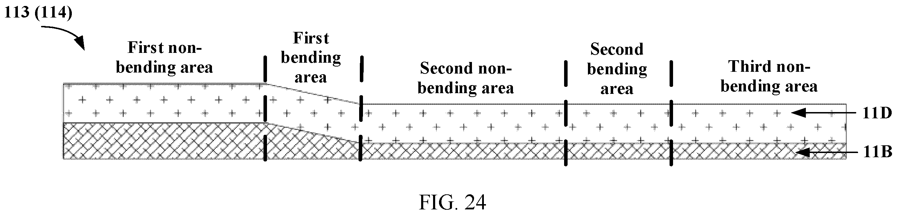

FIG. 24 is a diagram of a structure of another display cover 113 or protective layer 114 according to an embodiment of this application. In some optional processes, a cushion layer 11B and a substrate 11D may be bonded together by using a coating process. In the example, the cushion layer 11B may be made of an adhesive material, for example, an optical clear adhesive OCA. The cushion layer 11B is not only an elastomer film material, but also has a connection function, and the bonding layer 11A may not be required. Therefore, a thickness of a display module may be further compressed.

Refer to FIG. 24. In the example, the cushion layer 11B located in a first bending area is designed to be of an unequal-thickness structure, and the substrate 11D has an equal thickness in all areas.

To improve stiffness of an exposed non-bending area without weakening bendability of a bending area, embodiments of this application further provide some implementable structures. Details are as follows:

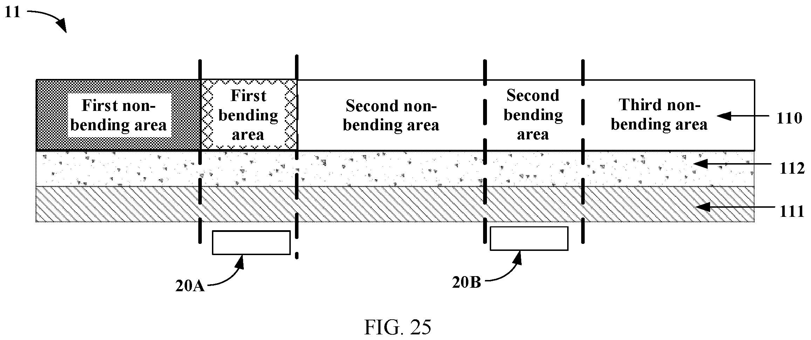

FIG. 25 is a diagram of a structure of a display module according to an embodiment of this application. In a cover plate 110 of a display module 11, an elastic modulus located in a first non-bending area is greater than an elastic modulus located in a first bending area. The cover plate 110 includes a hard area with a large elastic modulus and a soft area with a small elastic modulus.

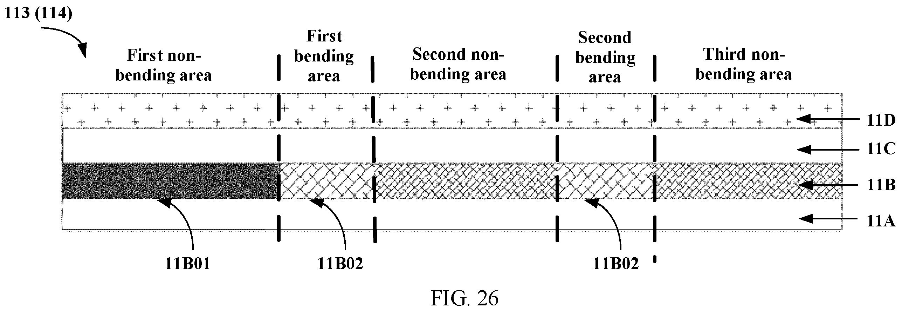

In some examples, when the cover plate 110 includes a display cover plate or a protective layer, the hard area and the soft area may be disposed in at least one of the display cover plate and the protective layer. For example, FIG. 26 is a diagram of a structure of a display cover 113 or protective layer 114 according to an embodiment of this application. A substrate 11D and a cushion layer 11B are included, and the substrate 11D and the cushion layer 11B are connected via a bonding layer 11C.

As shown in FIG. 26, the cushion layer 11B includes a hard area 11B01 (which may also be referred to as a first portion) and a soft area 11B02 (which may also be referred to as a second portion), and an elastic modulus of the hard area 11B01 is greater than an elastic modulus of the soft area 11B02. The hard area 11B01 is located in a first non-bending area, and the soft area 11B02 may be located in at least one of a first bending area and a second bending area.

In FIG. 26, the hard area 11B01 and the soft area 11B02 are connected to form an integrated structure. In some optional manufacturing processes, a cushion layer material may be first coated on a substrate, and then cured by area through UV (ultraviolet light), to obtain cushion materials with different hardness. In some other optional manufacturing processes, the cushion layer material may be heated by area to obtain portions with different elastic moduli, to obtain a hard area and a soft area.

The cushion layer 11B is divided into the hard area 11B01 and the soft area 11B02 with different elastic moduli. The hard area 11B01 is located in the first non-bending area, so that stiffness of the first non-bending area can be improved. The soft area 11B02 with a smaller elastic modulus is located in a bending area, to ensure that the bending area has good bendability.

In FIG. 26, an elastic modulus of the cushion layer 11B (which may be referred to as a third portion) located in a second non-bending area and a third non-bending area may be less than an elastic modulus of the hard area 11B01 and greater than an elastic modulus of the soft area 11B02.

In some examples, to improve stiffness of the second non-bending area and the third non-bending area, the elastic modulus of the cushion layer 11B located in the second non-bending area and the third non-bending area may be equal to the elastic modulus of the hard area 11B01.

When the elastic modulus of the cushion layer 11B located in the second non-bending area and the third non-bending area is less than the elastic modulus of the hard area 11B01 and greater than the elastic modulus of the soft area 11B02, the cushion material may be first coated. In this case, a modulus of the cushion material is low. Then, the cushion material is cross-linked through local UV curing or heating, and a portion with a low modulus and a portion with a high modulus are obtained by controlling energy of the UV or a heating temperature.

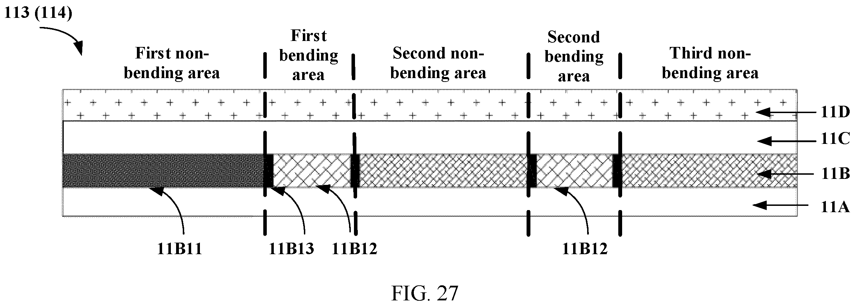

FIG. 27 is a diagram of a structure of another display cover 113 or protective layer 114 according to an embodiment of this application. A substrate 11D and a cushion layer 11B are included, and the substrate 11D and the cushion layer 11B are connected via a bonding layer 11C.

In this example, the cushion layer 11B includes a hard portion 11B 11 with a large elastic modulus and a soft portion 11B12 with a small elastic modulus. The hard portion 11B11 and the soft portion 11B12 are spliced together. The hard portion 11B 11 is located in a first non-bending area, and the soft portion 11B12 is located in at least one of a first bending area and a second bending area.

In some examples, as shown in FIG. 27, the hard portion 11B11 and the soft portion 11B12 may be spliced together by using a bonding layer 11B13. For example, when a bonding layer 11C located on a side of the cushion layer 11B is coated, an adhesive may overflow into a gap between the hard portion and the soft portion, to bond the hard portion and the soft portion together.

Refer to FIG. 27. To improve stiffness of a second non-bending area and a third non-bending area, an elastic modulus of the cushion layer 11B located in the second non-bending area and the third non-bending area may be equal to the elastic modulus of the hard portion.

In some other examples, the elastic modulus of the cushion layer 11B located in the second non-bending area and the third non-bending area may be less than the elastic modulus of the hard portion and greater than the elastic modulus of the soft portion.

In the example in FIG. 27, a material that may be selected for the hard portion 11B11 includes at least one of polyethylene terephthalate (polyethylene terephthalate, PET), transparent polyimide (CPI), and the like. A material that may be selected for the soft portion 11B12 includes at least one of a thermoplastic polyurethane elastomer TPU, a thermoplastic polyamide elastomer TPAE, and the like.

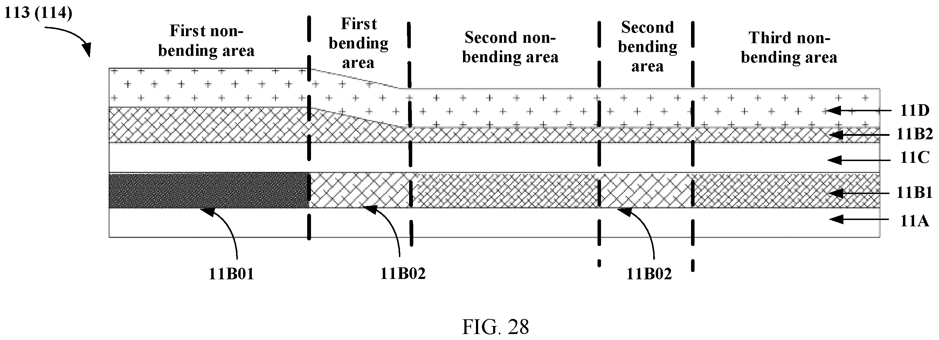

FIG. 28 is a diagram of a structure of another display cover 113 or protective layer 114 according to an embodiment of this application. A cushion layer 11B includes a first cushion layer 11B1 and a second cushion layer 11B2. The first cushion layer 11B 1 includes a hard area 11B01 with a large elastic modulus and a soft area 11B02 with a small elastic modulus. At the second cushion layer 11B2, a thickness of a portion located in a first bending area is designed to be of an unequal-thickness structure. In embodiments, a design of unequal thickness of the cushion layer is combined with a design of unequal elastic modulus.

When a display module is in a folded state and a first non-bending area is exposed, the first bending area connecting the first non-bending area and a second non-bending area needs to have a sufficient capability of resisting external force impact. For example, when an electronic device in a closed state falls, the first bending area may be damaged when being impacted by the ground and a hinge mechanism located on a side of the first bending area.

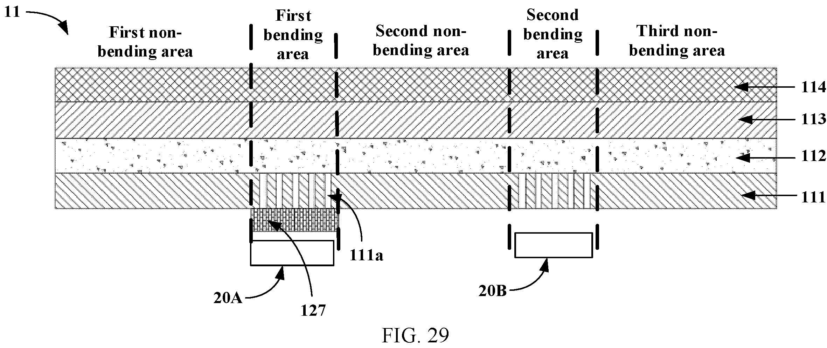

Embodiments of this application provide some new display modules 11. As shown in FIG. 29, a cushion 127 is disposed on a side that is of a bracket 111 and that is away from a display 112, and the cushion 127 is disposed at a position that is of the bracket 111 and that is opposite to a first bending area.

In some examples, to improve bendability of the bracket 111, a hollow-out structure 111a (which may be referred to as a bracket) is disposed in a portion opposite to the first bending area, and the cushion 127 is disposed at a position opposite to the hollow-out structure 111a.

The cushion 127 may be of a film material structure with one layer or a film material structure with more layers.

For example, the cushion 127 may be made of at least one of materials such as stainless steel SUS, a thermoplastic polyurethane elastomer TPU elastomer, a porous foam Foam material, and a PET film material.

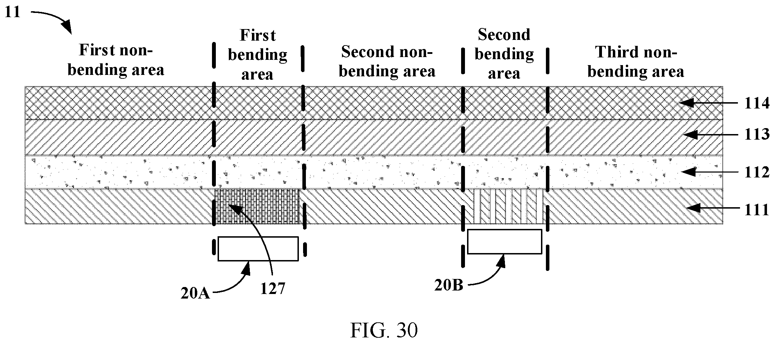

FIG. 30 is a diagram of a structure of another display module according to an embodiment of this application. In this implementation, a cushion 127 is disposed in a bracket 111. For example, a slot may be provided in the bracket 111, and the cushion 127 is disposed in the slot. The slot is located at a position opposite to a first bending area.

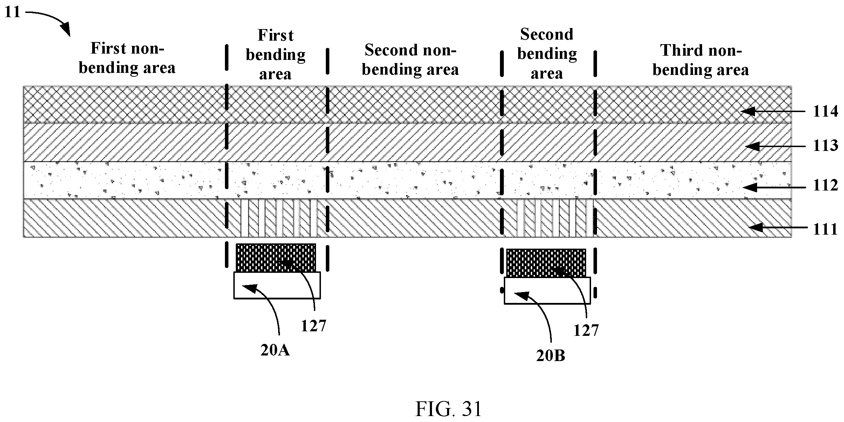

FIG. 31 is a diagram of a structure of another display module according to an embodiment of this application. In this implementation, cushions 127 are disposed on a first hinge mechanism 20A and a second hinge mechanism 20B that are located on a side of a display module.

As shown in FIG. 29 to FIG. 31, because the cushion 127 is included, when the first bending area is impacted by an external force, a degree of damage to the display module can be reduced by using a cushioning function of the cushion 127.

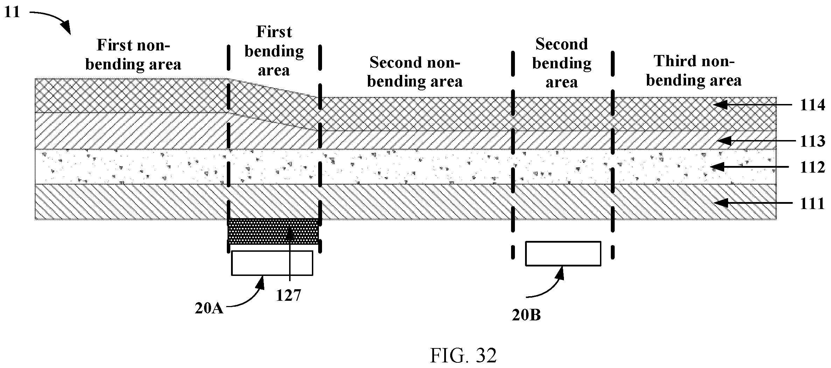

FIG. 32 is a diagram of a structure of another display module according to an embodiment of this application. In this structure, a display cover 113 located in a first bending area is designed to be of an unequal-thickness structure, and a cushion 127 is further disposed on a side that is of a bracket 111 and that is away from a display 112. This can improve stiffness of an exposed non-bending portion, does not weaken bendability of a bending portion, can reduce a degree of damage to the bending portion of the display module, and can improve use performance of the display module.

In some other examples, areas of a protective layer 114 may be designed to be of an unequal-thickness structure.

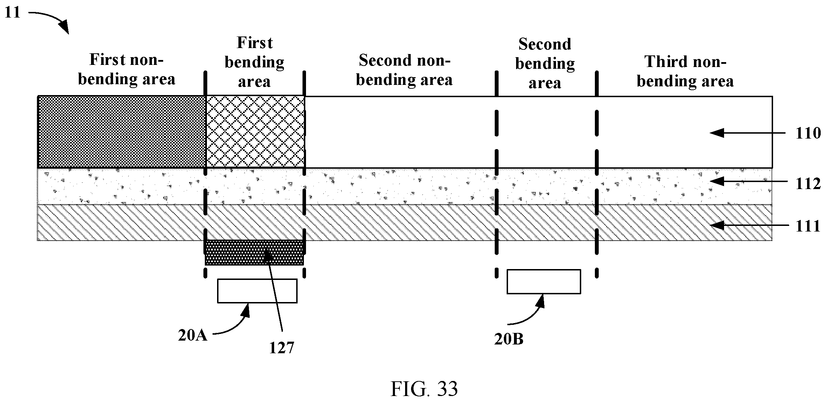

As shown in FIG. 33, a cover plate (for example, a display cover plate or a protective layer) located on a side of a display surface of a display 112 is designed to be of a structure with unequal elastic modulus. In addition, a cushion 127 is disposed at a position that is of a bracket 111 and that is opposite to a first bending area. This not only optimizes bendability of a bending portion of the display module, but also improves impact resistance and extrusion resistance performance of the bending portion.

In the example of this application, a first hinge mechanism may be disposed at a position corresponding to a first bending area, a second hinge mechanism may be disposed at a position corresponding to a second bending area, and at least one of the first hinge mechanism and the second hinge mechanism may use the hinge mechanism shown in FIG. 5. This can not only reduce light and shadow creases of these bending areas, but also improve bendability of the bending areas and stiffness of non-bending areas.

In the descriptions of this specification, the described specific features, structures, materials, or characteristics may be combined in a proper manner in any one or more of embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A hinge mechanism, wherein the hinge mechanism is disposed in a foldable electronic device, and the hinge mechanism comprises:
a first door plate and a second door plate, wherein a display module is disposed on a side of the first door plate and the second door plate, and the first door plate and the second door plate are movable toward or away from each other, to drive the display module to switch between an unfolded state and a closed state; and
a main shaft, wherein the main shaft is disposed on a side that is of the first door plate and the second door plate and that is away from the display module, wherein
a first mounting hole is provided on the main shaft, and a second mounting hole is provided on the first door plate;
the first door plate has a first surface and a second surface that are opposite to each other, the first surface faces the display module, the second surface faces the main shaft, an opening of the second mounting hole is located on the second surface, and there is a spacing between a bottom surface of the second mounting hole and the first surface; and
the first door plate is connected to the main shaft via connectors disposed in the first mounting hole and the second mounting hole.

2. The hinge mechanism according to claim 1, wherein the hinge mechanism further comprises a circuit board; and
there is a first gap between the first door plate and the main shaft, there is a second gap between the second door plate and the main shaft, and the circuit board passes through the first gap and the second gap.

3. The hinge mechanism according to claim 2, wherein the first door plate has a first end and a second end along a bending line of the display module, and the circuit board is disposed between the first end and the second end; and
the second mounting hole is provided on each of the first end and the second end.

4. The hinge mechanism according to any one of claims 1 to 3, wherein the second mounting hole is a threaded hole, and the connector is a threaded connector.

5. The hinge mechanism according to any one of claims 1 to 4, wherein a side that is of the main shaft and that faces the first door plate has a bump, the first door plate has a hole, the bump is disposed in the hole, and a surface that is of the bump and that is away from the main shaft is flush with the first surface.

6. An electronic device, comprising:
a display module; and
at least one hinge mechanism, wherein the at least one hinge mechanism is the hinge mechanism according to any one of claims 1 to 5, wherein
the at least one hinge mechanism is disposed on a side that is of the display module and that is away from a display surface.

7. The electronic device according to claim 6, wherein the at least one hinge mechanism of the electronic device comprises a first hinge mechanism and a second hinge mechanism; and
the display module comprises:
a display; and
a cover plate, disposed on a side of the display surface of the display, wherein the cover plate comprises a first non-bending area, a second non-bending area, a third non-bending area, a first bending area, and a second bending area, the first bending area is connected to the first non-bending area and the second non-bending area, the second bending area is connected to the second non-bending area and the third non-bending area, and both the first bending area and the second bending area are bendable along a bending line, to switch between an unfolded state and a closed state, wherein
a position of the first hinge mechanism corresponds to the first bending area, and a position of the second hinge mechanism corresponds to the second bending area; and
a thickness of the first non-bending area is not equal to a thickness of the second non-bending area.

8. The electronic device according to claim 7, wherein the thickness of the first non-bending area is greater than the thickness of the second non-bending area.

9. The electronic device according to claim 8, wherein the cover plate comprises:
a substrate and a first cushion layer, wherein the first cushion layer is closer to the display than the substrate, wherein
a thickness of the substrate located in the first non-bending area is greater than a thickness of the substrate located in the second non-bending area; and/or
a thickness of the first cushion layer located in the first non-bending area is greater than a thickness of the first cushion layer located in the second non-bending area.

10. The electronic device according to claim 9, wherein
a thickness of the first cushion layer located in the first bending area gradually decreases in a direction from the first non-bending area to the second non-bending area.

11. The electronic device according to claim 9 or 10, wherein the cover plate comprises:
a second cushion layer, wherein the second cushion layer comprises a first part and a second part, wherein
the first part of the second cushion layer is located in the first non-bending area, the second part of the second cushion layer is located in the first bending area, and an elastic modulus of the first part of the second cushion layer is greater than an elastic modulus of the second part of the second cushion layer.
